(19) Europäisches Patentamt
European Patent Office
Office européen des brevets

(11) **EP 4 522 475 B1**

(12) **EUROPEAN PATENT SPECIFICATION**

(45) Date of publication and mention of the grant of the patent:
**23.09.2026 Bulletin 2026/39**

(21) Application number: **23732384.5**

(22) Date of filing: **10.05.2023**

(51) International Patent Classification (IPC):
***B60W 30/14** (2006.01)*

(52) Cooperative Patent Classification (CPC):
**B60W 30/143;** B60K 2310/244; B60W 2050/0026; B60W 2520/16; B60W 2520/18; B60W 2540/049; B60W 2552/15; B60W 2720/10; B60W 2720/106

(86) International application number:
**PCT/EP2023/062408**

(87) International publication number:
**WO 2023/217853 (16.11.2023 Gazette 2023/46)**

# (54) SPEED CONTROL SYSTEM FOR A VEHICLE AND METHOD

GESCHWINDIGKEITSREGELSYSTEM FÜR EIN FAHRZEUG UND VERFAHREN

SYSTÈME DE RÉGULATION DE VITESSE DESTINÉ À UN VÉHICULE ET PROCÉDÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.05.2022 GB 202206822**

(43) Date of publication of application:
**19.03.2025 Bulletin 2025/12**

(73) Proprietor: **Jaguar Land Rover Limited**
**Coventry, Warwickshire CV3 4LF (GB)**

(72) Inventors:
- **JAVED, Usmaan**
  **Coventry Warwickshire CV3 4LF (GB)**
- **ALI, Syed Asad**
  **Coventry Warwickshire CV3 4LF (GB)**

(74) Representative: **Jaguar Land Rover Patents Department**
**Patents Department W/1/073**
**Abbey Road, Whitley**
**Coventry CV3 4LF (GB)**

(56) References cited:
**WO-A1-2014/027113**
**WO-A1-2018/007535**
**WO-A2-2015/059235**
**WO-A2-2016/174211**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 522 475 B1

## Description

### TECHNICAL FIELD

The present disclosure relates to a control system for a vehicle and method. Aspects of the invention relate to a speed control system for a vehicle, a system for controlling a speed of a vehicle, a vehicle, a method of controlling a speed of a vehicle and a non-transitory, computer-readable storage medium.

### BACKGROUND

It is known to provide a speed control system for a vehicle, in particular a speed control system for causing a vehicle to operate in accordance with a target speed value. It is desirable to provide an improved speed control system for assisting a driver negotiate terrain with obstacles such as slopes that must be negotiated.

When negotiating terrain where a path ahead of a vehicle includes a crest of a slope that causes a lowering of the nose of the vehicle, a driver may wish to reduce the speed of the vehicle as the vehicle negotiates the crest. The speed reduction may be helpful in enabling a driver to survey the terrain ahead of the vehicle and plan a path for the vehicle as it negotiates the terrain.

It is an aim of the present invention to address one or more of the disadvantages associated with the prior art.

WO2013/124321 discloses a method of speed control for a vehicle comprising detecting an off-highway condition of the vehicle and automatically setting a maximum speed control speed appropriate to the detected off-highway condition. A maximum speed control speed can be set in dependence on whether a vehicle is cresting a slope

WO 2018/007535 discloses a speed control system for a vehicle, the speed control system being configured to: automatically cause application of positive and negative torque, as required, to one or more wheels of a vehicle to cause a vehicle to travel in accordance with a target speed value.

WO 2016/174211 discloses a speed control system for a vehicle, comprising: torque control means for automatically causing application of positive and negative torque to one or more wheels of a vehicle to cause a vehicle to travel in accordance with a target speed value.

### SUMMARY OF THE INVENTION

Aspects and embodiments of the invention provide a speed control system, a system for controlling a speed of a vehicle, a vehicle and a method of controlling a speed of a vehicle as claimed in the appended claims

According to an aspect of the present invention there is provided a speed control system for a vehicle, the speed control system configured to cause the vehicle to operate in accordance with a target speed value, the speed control system comprising one or more controllers, the speed control system configured to:

determine when the vehicle is cresting and
cause a reduction in speed of the vehicle in dependence on the determination that the vehicle is cresting,
wherein when it is determined that a reduction in vehicle speed is required in response to a determination that the vehicle is cresting, the speed control system is configured to limit the value of jerk associated with the reduction in speed, the value of jerk being a rate of change of acceleration of the vehicle, such that the value of jerk does not exceed a jerk limit value.

Embodiments of the present invention have the advantage that vehicle composure and occupant enjoyment of a vehicle may be enhanced when vehicle speed is reduced in response to a determination that the vehicle is cresting. This is achieved by limiting the value of jerk experienced by the vehicle such that it does not exceed the jerk limit value due to the speed control system causing the reduction in speed due to cresting. It is to be understood that excessive values of vehicle jerk can cause occupant discomfort and fatigue. Embodiments of the present invention mitigate these effects by limiting the maximum value of jerk experienced by the vehicle when the system causes the reduction in speed responsive to a determination that the vehicle is cresting.

The speed control system may be configured to receive an acceleration signal indicative of a rate of acceleration of the vehicle. The speed control system may be configured to calculate a jerk signal indicative of a rate of change of acceleration of the vehicle.

In addition or instead, the speed control system may be configured to receive a jerk signal indicative of a rate of change of rate of acceleration of the vehicle.

The speed control system may be configured to limit the value of vehicle jerk by controlling the rate of acceleration of the vehicle such that the jerk signal does not exceed a jerk signal limit value corresponding to the jerk limit value.

The speed control system may be an ’off-road’ or ’off-highway’ speed control system.

The speed control system is configured to receive a driving surface gradient signal indicative of a gradient of a driving surface upon which the vehicle is being driven.

The speed control system is configured to set the jerk limit value in dependence at least in part on at least one vehicle parameter.

The speed control system is configured to set the jerk limit value in dependence at least in part on the driving surface gradient. For example, the jerk limit value may be further reduced for a lower grip driving surface, such as grass, gravel or snow, than for a higher grip driving surface such as tarmac or concrete.

It is to be understood that the vehicle continually adjusts the jerk limit value in response to changes in driving surface gradient as determined by reference to the driving surface gradient signal. Thus, if the driving surface gradient becomes increasingly negative as a function of distance travelled, the jerk limit value may reduce as the gradient becomes more negative.

Optionally, the speed control system is configured to determine the jerk limit value in dependence at least in part on the at least one vehicle parameter by means of a look-up table (LUT).

The speed control system is configured to reduce the jerk limit value as a function of increasingly negative driving surface gradient.

Optionally, the speed control system is configured to set the jerk limit value in dependence at least in part on an occupant comfort parameter indicative of a desired value of occupant comfort.

The occupant comfort parameter may be set in response to a user input of desired occupant comfort, via a user interface. The user interface may comprise one or more of a touch screen, a rotary dial, a selector button and a voice recognition system.

Thus, it is to be understood that, in some embodiments, the speed control system may set the jerk limit value in dependence at least in part on both driving surface gradient and occupant comfort parameter. In some alternative embodiments the jerk limit value may be set in dependence at least in part on only one of driving surface gradient and occupant comfort parameter.

Optionally, the speed control system is configured to set the jerk limit value in dependence at least in part on at least one of:

a terrain indicator parameter indicative of the nature of terrain over which the vehicle is driving,
an occupancy parameter indicative of a number of occupants of the vehicle,
a vehicle ride height parameter indicating selected vehicle ride height; and
a cross-articulation parameter indicative of an amount of cross-articulation experienced by the vehicle.

The vehicle ride height parameter may be indicative of a vehicle suspension setting, by means of which a height of a body of the vehicle above flat, level ground may be varied. The suspension may for example be an air suspension system by means of which ride hight may be varied by varying a pressure of air associated with the suspension system. The suspension system may for example have a relatively low, 'access' ride height setting, permitting ease of access to the vehicle, an 'on road' or 'on highway' setting suitable for travel on a highway that is higher than the access ride height setting, and an 'off road' setting suitable for travel in off-highway conditions that is higher than the on-highway ride height setting.

The cross-articulation parameter or value may be indicative of an amount of cross-articulation of respective pairs of front and rear wheels of the vehicle.

Optionally, the cross-articulation value is dependent on:

a first articulation value indicative of an extent to which the wheels of a first diagonal wheel pair are articulated in a positive or negative direction with respect to a baseline value, and the extent to which the wheels are articulated in phase with one another;
a second articulation value indicative of an extent to which the wheels of a second diagonal wheel pair different from the first are articulated in a positive or negative direction with respect to a baseline value, and the extent to which the wheels are articulated in phase with one another; and
an extent to which the first and second articulation values correspond to antiphase movement of respective pairs with respect to one another.

The baseline or datum value may correspond to a position midway between upper and lower extremes of travel of the suspension of a given wheel.

Optionally, the speed control system may be configured to receive wheel articulation signals S_FL, S_FR, S_RL, S_RR, where S_FL is a signal indicative of the front left suspension height FL, S_FR is a signal indicative of the front right suspension height FR, S_RL is a signal indicative of the rear left suspension height RL and S_RR is a signal indicative of the rear right suspension height RR.

Optionally, the cross-articulation value, CrossArtc_L, is calculated according to the formula:

CrossArtc_L = abs(FL-FR) + abs(RL-RR) + abs(FL-RL) + abs(FR-RR) - abs(FL-RR) - abs(FR-RL)

where FL is the front left suspension height, FR is the front right suspension height, RL is the rear left suspension height and RR is the rear right suspension height.

It is to be understood that if the vehicle is travelling over certain types of terrain, the speed control system may set the jerk limit value in dependence on the nature of the terrain as indicated by the terrain indicator parameter. For terrain that is expected to be particularly uncomfortable to negotiate, such as rocky terrain, the jerk limit value may be set to a higher value. It is to be understood that a user may anticipate larger amounts of jerk when traversing certain types of terrain and therefore be prepared to experience larger amounts of jerk.

Other means for determining jerk limit value may be useful in some embodiments.

Optionally, the speed control system is further configured to receive a pitch rate signal indicative of a rate of change of pitch attitude of a vehicle, the speed control system being configured to determine that the vehicle is cresting when the pitch rate information signal indicates that a change of vehicle pitch attitude exceeds a predetermine rate in a direction corresponding to a lowering of pitch attitude, and the gradient signal indicates that the gradient value of the driving surface is below a limit value.

It is to be understood that, in some embodiments, a positive gradient value corresponds to an uphill gradient and a negative gradient value corresponds to a downhill gradient.

Optionally, the speed control system is configured to cause the reduction in speed when it is determined that the vehicle is cresting by at least one of:

application of brake torque by means of a vehicle braking system; and
reducing an amount of positive drive torque applied to one or more wheels of the vehicle.

In a further aspect of the invention there is provided a system for controlling a speed of a vehicle comprising:

a speed control system according to a preceding aspect; and
one or more sensors configured to output information indicative of vehicle jerk.

In some embodiments the one or more sensors may comprise an accelerometer or a gyroscope. Other suitable sensors are known to the skilled person and may be utilised in embodiments of the invention.

It is to be understood that vehicle jerk may be determined, by way of example, by reference to a signal indicative of vehicle speed (for example by calculating a double differential of speed) or a signal indicative of vehicle acceleration (for example by calculating a rate of change of acceleration from the acceleration signal).

In a still further aspect of the invention there is provided a vehicle comprising the speed control system according to a preceding aspect or the system of a preceding aspect.

In another aspect of the invention there is provided a method of controlling a speed of a vehicle implemented by a speed control system, comprising:

causing the vehicle to operate in accordance with a target speed value; and
determining when the vehicle is cresting,
receiving a driving surface gradient signal indicative of a gradient of a driving surface upon which the vehicle is being driven,
the method comprising causing a reduction in speed of the vehicle when it is determined that the vehicle is cresting, whereby when it is determined that a reduction in vehicle speed is required in response to a determination that the vehicle is cresting, the method comprises limiting the value of jerk associated with the reduction in speed, the value of jerk providing an indication of a rate of change of acceleration of the vehicle, such that the value of the jerk does not exceed a jerk limit value, wherein the speed control system is configured to set the jerk limit value in dependence at least in part on the driving surface gradient and reduce the jerk limit value as a function of increasingly negative driving surface gradient.

The method comprises setting the jerk limit value in dependence at least in part on at least one vehicle parameter.

In yet another aspect of the invention there is provided non-transitory, computer-readable storage medium storing instructions thereon that, when executed by one or more electronic processors, causes the one or more electronic processors to carry out the method of a preceding aspect.

## BRIEF DESCRIPTION OF THE DRAWINGS

One or more embodiments of the invention will now be described, by way of example only, with reference to the

accompanying drawings, in which:

Figure 1 shows a schematic representation of a vehicle having a speed control system according to an embodiment of the invention;
Figure 2 shows a schematic representation of a steering wheel of a vehicle having a speed control system according to an embodiment of the invention;
Figure 3 shows a schematic representation of a speed control system according to an embodiment of the invention;
Figure 4 shows a vehicle in accordance with an embodiment of the invention ascending a slope toward a crest;
Figure 5 shows a vehicle in accordance with an embodiment of the invention ascending a slope toward another crest;
Figure 6 shows a vehicle in accordance with an embodiment of the invention negotiating a horizontal driving surface toward a further crest;
Figure 7 shows a vehicle in accordance with an embodiment of the invention ascending a slope toward a crest, beyond which a further crest is present;
Figure 8 is a plot of target cresting acceleration determined by the speed control system as a function of driving surface gradient and comfort parameter setting;
Figure 9 is a flow diagram illustrating operation of the speed control system upon detecting a crest in order to mitigate jerk;
Figure 10 is a flow diagram further illustrating operation of the speed control system in order to mitigate jerk once a cresting event has finished; and
Figure 11 is a schematic illustration of an electronic controller comprised by a vehicle control unit (VCU) and configured to implement the speed control system of the VCU.

**DETAILED DESCRIPTION**

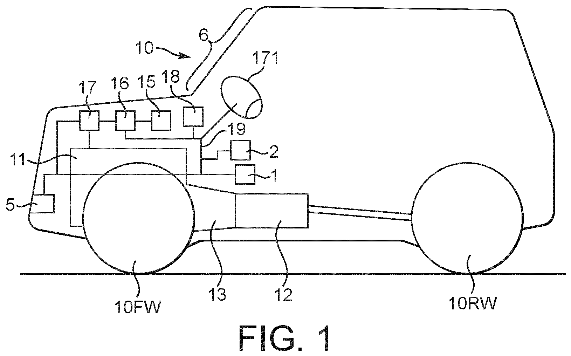

FIG. 1 is a schematic illustration of a vehicle 10 according to an embodiment of the present invention. The vehicle 10 has a prime mover or motor 11 in the form of an internal combustion engine. The engine 11 is coupled to a transmission 12 by means of a coupling 13. The coupling 13 is arranged to allow the transmission 12 progressively to reach a speed compatible with motor speed when the vehicle 10 is accelerated from rest. The coupling 13 is typically a friction clutch, torque converter or the like. The transmission 12 is arranged to drive a pair of rear wheels 10RW and optionally a pair of steerable front wheels 10FW in addition. An accelerator pedal 1 allows a driver to control an amount of torque developed by the motor 11 under the control of a powertrain controller 17 whilst a brake pedal 2 allows a driver to apply a braking system under the control of a brake controller 16. A driving mode selector 19 is provided by means of which a driver may select an on-road driving mode or one of a plurality of off-road driving modes which include a grass/gravel/snow (GGS) driving mode, sand (S) driving mode and a mud and ruts (MR) driving mode. In some embodiments the selector also allows an 'automatic response mode' to be selected in which the vehicle 10 determines automatically the optimum driving mode at any given moment in time. The driving modes may be referred to as "terrain response" (or "TR") modes.

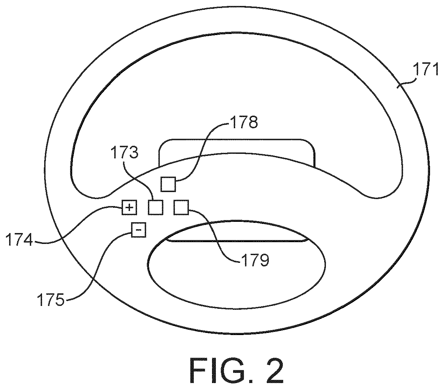

The vehicle 10 has a vehicle control unit (VCU) 15 that is operable to implement a low-speed vehicle speed control function or system. The low-speed vehicle speed control function may also be referred to as an 'off-road' or 'off-highway' cruise control function or system. The low-speed vehicle speed control function is operable provided vehicle speed VREF does not exceed a predetermined maximum speed. In the present embodiment the predetermined maximum speed is 30 km/h. Above 30 km/h the VCU 15 is operable to implement a higher-speed speed control function or system. The VCU 15 may be described as implementing a low-speed speed control system or a higher-speed speed control system. Both the low-speed speed control system and higher-speed speed control system functionality is controlled by a user by means of input controls mounted to a steering wheel 171 of the vehicle 10. The steering wheel 171 is shown in more detail in FIG. 2. It is to be understood that the low-speed vehicle speed control function or system may be useful when driving in off-highway driving conditions whilst the higher-speed speed control function or system may be useful when driving in on-highway driving conditions such as on a relatively smooth, dry tarmac or concrete driving surface.

The input controls include a 'set-speed' control 173, actuation of which sets the value of a parameter driver_set_speed to be substantially equal to the current vehicle speed. Depression of a '+' (or 'plus') button 174 allows the set-speed to be increased whilst depression of a '-' (or 'minus') button 175 allows the set-speed to be decreased. In some embodiments, if the speed control function is not active when the '+' button 174 is depressed, the speed control function is activated.

In the present embodiment, the VCU 15 is configured to implement an active speed control system (or 'active cruise control') when the higher-speed speed control system is operating. The active speed control system is configured to cause the vehicle 10 to maintain a predetermined distance behind a lead vehicle in certain situations as will be explained. The wheel 171 also has a pair of following distance control buttons 178, 179 for setting a value of a parameter distance_following, being the distance the driver desires the vehicle 10 to maintain behind the lead vehicle. The VCU 15 is operable to control the vehicle 10 to maintain a distance behind a lead vehicle that is substantially equal to a distance represented by

a parameter distance_following. A first of the buttons 178 is operable to increase the value of the parameter distance_following, and therefore the distance between the vehicle 10 and the lead vehicle, whilst a second of the buttons 179 is operable to decrease the value of the parameter distance_following. The vehicle 10 has a radar module 5 mounted to a front thereof and arranged to project a radar beam in a direction ahead of the vehicle 10. The module 5 is arranged to detect radiation reflected by a lead vehicle and to determine a distance of the lead vehicle from vehicle 10 (being a 'host' vehicle). The module 5 is provided with a signal indicative of a current speed of the host vehicle 10. From this signal and data in respect of a variation in distance of the lead vehicle from the host vehicle 10 as a function of time, the module 5 is able to calculate a speed of the lead vehicle. Other arrangements for determining distance from the lead vehicle and speed of the lead vehicle are also useful. In some embodiments, active speed control functionality is not provided and the following distance control buttons 178, 179 are omitted. In some embodiments, the radar module 5 is omitted.

The higher-speed speed control system is not the subject of the present application. The remainder of the present description relates to the low-speed speed control system unless otherwise stated.

When the low-speed speed control system is activated, the VCU 15 controls the speed of the vehicle 10 in accordance with a target speed value which is set substantially equal to a driver selected set-speed, driver_set_speed, or a lower value if this is desirable as described in more detail below. The VCU 15 does this by calculating a maximum allowable speed of the vehicle 10 at a given moment in time, max_set_speed. The VCU 15 sets the value of max_set_speed to the value of driver set-speed, driver_set_speed, unless a lower value is desirable as described in more detail below. The VCU 15 controls the speed of the vehicle 10 in accordance with max_set-speed, being a target speed value for the vehicle, by causing vehicle speed VREF to be equal to the value of max_set_speed.

The VCU 15 then outputs to the powertrain controller 17 and brake controller 16 a target value of acceleration at a given moment in time, acc_tgt, in order to cause vehicle speed, as determined by reference to the vehicle reference speed VREF, to maintain the desired value. If the driver over-rides the speed control system and VREF exceeds 30km/h, the speed control system suspends operation until VREF falls to 30km/h or less.

The driver may set the value of driver_set_speed of the low-speed speed control system to the current vehicle speed, VREF (provided VREF does not exceed 30km/h), by depressing the 'set-speed' control 173 whilst the vehicle 10 is travelling. When the VCU 15 detects that the 'set-speed' control 173 has been pressed, the VCU 15 takes a snapshot of the current speed of the vehicle 10, VREF, and sets the value of driver_set_speed to correspond to the current speed. (It is to be understood that, if VREF exceeds 30 km/h and the set-speed control 173 is pressed, the higher-speed speed control system is activated. In the present embodiment the low-speed speed control system will not automatically reactivate once the speed falls below 30km/h if the higher-speed speed control system has been activated since the value of driver_set_speed has been set to a value exceeding 30 km/h).

As described above, when the vehicle 10 is travelling along a road and the higher-speed speed control system is active, i.e. VREF and driver_set_speed exceed a minimum allowable set-speed set_speed_min, in the present embodiment 30 km/h, the VCU 15 is operable to allow the user to command the VCU 15 to maintain the current vehicle speed by depressing set-speed control 173. In the absence of traffic ahead of the vehicle 10 or other factors requiring a lower speed (see below), the VCU 15 controls the speed of the vehicle 10 VREF to maintain VREF substantially equal to the set-speed value driver_set_speed.

In the present embodiment, if the VCU 15 detects (by means of radar module 5) the presence of a lead vehicle ahead of the vehicle 10, the VCU 15 is operable to reduce the speed of the host vehicle 10 according to the speed of the lead vehicle in order to maintain a distance behind the lead vehicle that is no less than a prescribed distance. The prescribed distance may be set by a driver by means of 'following distance' control buttons 178, 179 as noted above. This function is only available in the higher-speed speed control system is active.

The vehicle 10 has a human machine interface (HMI) in the form of a touchscreen 18 by means of which the VCU 15 may communicate with a user. As described above, when the low-speed speed control system is active, the VCU 15 is operable to calculate a maximum allowable value of set-speed, max_set_speed, in dependence on the terrain over which the vehicle is travelling. Thus, the VCU 15 is operable to limit the maximum speed at which it will control a vehicle 10 to operate in dependence on the terrain. Embodiments of the invention allow improved vehicle composure when operating in off-highway conditions with reduced driver intervention. That is, because the VCU 15 determines the maximum allowable value max_set_speed of the set-speed and limits the set-speed accordingly, a driver is not required to intervene in order to reduce the value of vehicle set-speed when the prevailing terrain so warrants, and to increase the set-speed when the prevailing terrain allows.

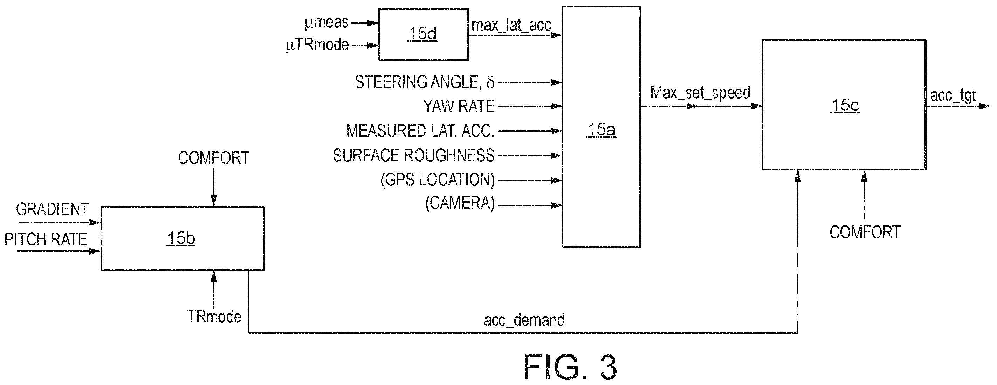

FIG. 3 illustrates a manner in which the VCU 15 determines a value of max_set_speed. The VCU 15 includes a 'max set speed calculation' portion (or 'engine') 15a, a 'cresting acceleration demand calculation' portion (or 'engine') 15b and a 'vehicle acceleration calculation' portion (or 'engine') 15c. Additionally, an input to the 'max set speed calculation' portion (or 'engine') 15a comprises a 'lateral acceleration limit calculation' portion 15d.

The 'vehicle acceleration calculation' portion 15c is configured to calculate a desired value of acceleration of the vehicle 10 at a given moment in time, acc_tgt, based on inputs received, including inputs from the 'max set speed calculation' portion 15a and the 'cresting acceleration demand calculation' portion 15b. The 'vehicle acceleration

calculation' portion 15c outputs the value of desired acceleration, optionally as a speed reduction signal, at a given moment in time, acc_tgt, to the powertrain controller 17 and brake controller 16 as noted above, which attempt to cause actual vehicle acceleration to be equal to acc_tgt as quickly as possible, within any given comfort limits. The brake controller or powertrain controller may alter the speed by causing a braking or brake torque to be applied to wheels of the vehicle by means of a vehicle braking system. Alternatively, or in addition, the reduction in acceleration or speed of the vehicle may be by way of reducing an amount of positive drive torque applied to one or more wheels of the vehicle. The VCU 15 controls the rate of acceleration (positive or negative) at a given moment in time by causing the value of acc_tgt output by the 'vehicle acceleration calculation' portion 15c to change at the desired rate. In some embodiments, including the embodiment of FIG. 3, the 'vehicle acceleration calculation' portion 15c receives the value of a comfort parameter COMFORT indicative of a level of comfort required by an occupant of the vehicle as explained in further detail below. In turn, the 'vehicle acceleration calculation' portion 15c adjusts the maximum allowable rate of change of acceleration (or 'jerk') at a given moment in time in dependence on the value of comfort parameter in order to enable control over occupant comfort. Thus, for higher required levels of occupant comfort, the 'vehicle acceleration calculation' portion 15c reduces the maximum allowable value of jerk in order to enhance occupant comfort. Thus, when a change in vehicle acceleration is required, the 'vehicle acceleration calculation' portion 15c limits the rate of change of acceleration in order to enhance occupant comfort. The maximum allowable amount of jerk may be referred to as a 'jerk limit value'.

The 'max set speed calculation' portion 15a of the VCU 15 is configured to receive inputs corresponding to a number of vehicle parameters in addition to the current value of driver_set_speed. As described above, the 'max set speed calculation' portion 15a outputs a value of max_set_speed that is no greater than the value of driver_set_speed but may be lower if the 'max set speed calculation' portion 15a determines that driving conditions so demand, as described in further detail below. The parameters are: (a) a current vehicle reference value of surface coefficient of friction 'μmeas' being a value calculated by the VCU 15 based on values of one or more parameters such as an amount of torque applied to a wheel at which excessive wheel slip was induced; (b) a value of expected surface coefficient of friction corresponding to a currently selected vehicle driving mode 'μTRmode' being a prescribed value for each driving mode; (c) a current value of steering angle, corresponding to a steerable road wheel angle or, in some embodiments, a steering wheel position 'STEERING ANGLE, δ'; (d) a current yaw rate of the vehicle (determined by reference to an output of an accelerometer), 'YAW RATE'; (e) a current measured value of lateral acceleration, 'MEASURED LAT.ACC.', (also determined by reference to an output of an accelerometer); (f) a current measured value of surface roughness, 'SURFACE ROUGHNESS', (determined by reference to suspension articulation). In some embodiments, the VCU 15 may also receive (g) a signal indicative of a current location of the vehicle, 'GPS LOCATION', (determined by reference to a global satellite positioning system (GPS) output or other global navigation satellite systems or other positioning systems); and/or (h) information obtained by means of a camera system, 'CAMERA'. The information obtained by means of a camera system or imaging system may include for example an alert in the event that it is determined that the vehicle 10 may be about to depart from an off-road lane or track.

The 'lateral acceleration limit calculation' portion 15d of the VCU 15 is configured to determine, from the reference value of surface coefficient of friction, μmeas, and expected value of surface coefficient of friction, μTRmode, a maximum allowable rate of lateral acceleration max_lat_acc of the vehicle 10 during the course of a journey. The VCU 15 employs this value of max_lat_acc to limit the value of max_set_speed when the vehicle is cornering, so as to prevent understeer.

In the present embodiment the 'max set speed calculation' portion 15a of the VCU 15 is also operable to calculate a radius of curvature of a path of the vehicle 10 over terrain based on steering angle. The VCU 15 compares this radius of curvature with the vehicle yaw rate and measured lateral acceleration. If the VCU 15 detects the presence of understeer the VCU 15 is operable to reduce the value of max_set_speed accordingly. In some embodiments where a signal indicative of a current location of the vehicle is received, the VCU 15 may also take into account a path of travel of the vehicle determined by reference to the location signal in order to increase a reliability of the determination of the amount of understeer present, if any.

In some embodiments, yaw rate and measured lateral acceleration are not employed in determining the amount of understeer present. Other arrangements are also useful.

The 'max set speed calculation' portion 15a of the VCU 15 also determines the value of max_set_speed according to a value of surface roughness of the terrain over which the vehicle 10 is driving. The value of max_set_speed may be reduced as the surface roughness increases.

In the present embodiment, the cresting acceleration demand calculation portion 15b of the VCU 15 also receives a driving surface gradient signal indicative of the gradient of the driving surface over which the vehicle 10 is travelling and a pitch rate signal indicative of a rate of change of pitch of the vehicle 10. The cresting acceleration demand calculation portion 15b of the VCU 15 is configured to generate a value of desired acceleration rate of the vehicle 10, tgt_crest_acc, at a given moment in time. The cresting acceleration demand calculation portion 15b outputs an acceleration demand signal acc_demand to the vehicle acceleration calculation portion 15c in order to cause the vehicle 10 to accelerate at the desired rate tgt_crest_acc.

If the cresting acceleration demand calculation portion 15b determines that the vehicle is not cresting, the value of

parameter acc_demand is set to correspond to the maximum allowable value of vehicle acceleration, Amax. This is so that the vehicle acceleration calculation portion 15c does not reduce vehicle speed in response to the signal acc_demand, but rather only in response to the signal max_set_speed received from the max set speed calculation portion 15a.

If the cresting acceleration demand calculation portion 15b determines that the vehicle is cresting, the value of a parameter acc_demand is set to correspond to the desired acceleration rate tgt_crest_acc. The cresting acceleration demand calculation portion 15b of the VCU 15 is configured to determine whether the vehicle is cresting in dependence on the driving surface gradient signal ('GRADIENT') and the pitch rate signal ('PITCH RATE'). It is to be understood that, in order to cause a reduction in vehicle speed when it is determined that the vehicle is cresting, the value of acceleration rate acc_demand will correspond to a negative rate of acceleration.

In particular, the cresting acceleration demand calculation portion 15b of the VCU 15 is configured to determine that the vehicle is cresting when the following conditions are met that:

(a) a rate of change of pitch of the vehicle, as determined by reference to the pitch rate signal, exceeds a predetermined value for a predetermined period; and
(b) a gradient value of the driving surface, as determined by reference to the driving surface gradient signal, is below a predetermined value.

The gradient value of the driving surface may herein be referred to as the driving surface gradient value.

In the present embodiment, the predetermined value of rate of change of pitch of the vehicle is 5 degrees per second, the predetermined period is 1 second and the predetermined value of gradient of the driving surface is +5%. Thus, it is to be understood that in order for the cresting acceleration demand calculation portion 15b of the VCU 15 to determine that the vehicle is cresting, the driving surface gradient must be less than a value of +5% (being an uphill gradient), i.e. the driving surface must have a gradient of less than a 5% uphill gradient). It is to be understood that the driving surface gradient condition will be met, for example, if the driving surface gradient is +4%, substantially zero (corresponding to a horizontal surface) or negative, corresponding to a downhill slope. Other predetermined values of rate of change of pitch, predetermined period and predetermined gradient may be useful in some embodiments.

As noted above, it is to be understood that, when the cresting acceleration demand calculation portion 15b of the VCU 15 determines that the vehicle is not cresting, it outputs a value of acc_demand that corresponds to the maximum permissible value of acceleration rate of the vehicle, Amax. This is so as to cause the vehicle acceleration calculation portion 15c to ignore the acc_demand signal in favour of the max_set_speed signal received from the max set speed calculation portion 15a of the VCU 15.

In some embodiments, when the VCU 15 determines that the conditions for a determination that the vehicle is cresting are met, the VCU 15 sets the value of acc_demand to a fixed, predetermined value corresponding to a negative acceleration, i.e., a rate of deceleration, in order to cause the vehicle acceleration calculation portion 15c to impose the deceleration rate on the vehicle 10. It is to be understood that, in response to receipt of a demand from the 'cresting acceleration demand calculation' portion 15b for a negative rate of acceleration of the vehicle 10, the vehicle acceleration calculation portion 15c of the VCU 15 causes the value of vehicle speed, VREF, to reduce at a rate corresponding to the requested rate of deceleration acc_demand.

In some embodiments, the acc_demand is output as a speed reduction signal operable to reduce or replace the max_set_speed or driver_set_speed. The speed reduction signal may be output to a further vehicle system, such as a powertrain controller or control system or a brake or braking controller or control system, in order that the speed of the vehicle is reduced whilst cresting is identified.

In the present embodiment, the value of acc_demand is itself dependent on at least one parameter. In the present embodiment, when the VCU 15 determines that the conditions for a determination that the vehicle is cresting are met, the 'cresting acceleration demand' calculation' portion 15b of the VCU 15 calculates a value of tgt_crest_acc that is dependent on the following parameters:

(1) a current value of driving surface gradient, the value of tgt_crest_acc being increasingly negative (corresponding to progressively higher rates of deceleration) as a function of increasingly negative driving surface gradient;
(2) the driving mode ('TR mode') in which the vehicle is currently operating; and
(3) a value of comfort parameter 'COMFORT' (indicative of a level of comfort required by an occupant of the vehicle), the value of tgt_crest_acc being increasingly negative (corresponding to progressively higher rates of deceleration) as a function of increasing level of required comfort. Thus, the reduction in speed of the vehicle 10 over the period for which the deceleration is imposed will be greater as the level of required comfort increases.

It is to be understood that the value of tgt_crest_acc may be set in dependence on the driving mode according to an empirically determined look up table (LUT). In the present embodiment, when the selected driving mode (TRmode) is the sand mode, no reduction in vehicle speed is caused in response to a determination that the vehicle is cresting, whilst a

reduction is caused in all other driving modes, such as the GGS driving mode and highway driving mode. In the present embodiment the value of tgt_crest_acc calculated in driving modes other than the sand mode is substantially the same, for a given set of conditions including the value of VREF, gradient and rate of change of pitch. In some alternative embodiments, the value of tgt_crest_acc calculated by the cresting acceleration demand calculation portion 15b in at least two driving modes other than the sand mode may be different for a given set of conditions.

In the present embodiment, the VCU 15 is configured to receive an input indicative of a desired level of occupant comfort via touchscreen 18 although other input devices may be useful such as a rotary dial. In the present embodiment, the comfort signal indicates whether the comfort setting has a value of 0 (zero), 1, 2, 3 or 4. A value of zero is considered to correspond to an 'off' condition of the comfort setting, indicating that no account is to be taken of passenger comfort when setting the value of tgt_crest_acc. In the present embodiment, the VCU determines a value of tgt_crest_acc according to driving surface gradient, and then increases the value of tgt_crest_acc by a factor that causes a progressively greater reduction in the value of vehicle speed the higher the value of comfort setting. The input indicative of a desired level of occupant comfort described in the present embodiment is user-selectable, and thus may be referred to as a user-selectable input indicative of a desired level of occupant comfort or a desired value of occupant comfort parameter or a comfort parameter or a level of desired occupant comfort or a value of comfort parameter or being indicative of a level of comfort required by an occupant of the vehicle.

It is to be understood that, in some embodiments, the vehicle 10 is not provided with the capability to allow a driver to input a desired value of occupant comfort parameter.

It is to be understood that, in the present embodiment, the VCU 15 is configured not to allow the value of max_set_speed to be reduced below a predetermined minimum value so as not to inconvenience a user. Accordingly, the vehicle acceleration calculation portion 15c does not attempt to cause a decrease in vehicle speed in response to a negative acceleration demand from the cresting acceleration demand calculation portion 15b if vehicle speed VREF has reached the predetermined minimum allowable value. In the present embodiment the predetermined minimum value is 2 km/h. Other values may be useful in some embodiments.

As described above, in the present embodiment, the VCU 15 is configured to determine that the vehicle is cresting when cresting conditions (a) and (b) above are met, and calculate a value of tgt_crest_acc that depends on parameters (1) - (3) above.

As described above, in the present embodiment, the VCU 15 calculates a value of parameter tgt_crest_acc and causes the 'vehicle acceleration calculation' portion 15c to impose a rate of acceleration on the vehicle 10 corresponding to the value of tgt_crest_acc. In the present embodiment, this rate of acceleration is imposed for a predetermined period, referred to as a predetermined speed reduction period, following the determination that the vehicle is cresting. The predetermined speed reduction period is 2s in the present embodiment but in some embodiments may be any other suitable time period such as 1s, 5s, 10s or any other suitable value.

In an alternative embodiment, the VCU 15 may calculate a value of parameter tgt_crest_acc and cause the 'vehicle acceleration calculation' portion 15c to impose a rate of acceleration on the vehicle 10 corresponding to the value of tgt_crest_acc for a predetermined distance, referred to as a predetermined speed reduction distance, following the determination that the vehicle is cresting. The predetermined speed reduction distance may be any suitable distance such as a single wheelbase, twice the wheelbase, three times the wheelbase or any suitable distance. It is to be understood that the distance need not be a whole or number of whole wheelbase(s) to be considered a suitable distance. It is to be understood that by wheelbase is meant the centre-to-centre distance from a front wheel of the vehicle to a rear wheel of the vehicle in a direction parallel to a longitudinal axis of the vehicle.

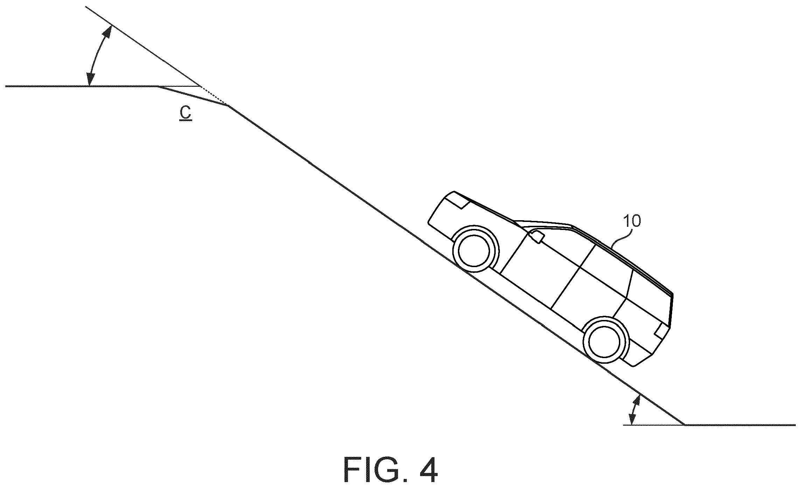

FIG. 4 illustrates a vehicle 10 ascending a slope towards a crest C, beyond which the driving surface is substantially level (horizontal). As the vehicle 10 traverses the crest C, the VCU 15 detects a reduction in gradient of the driving surface and a lowering of vehicle pitch (i.e., vehicle pitch attitude). If the rate of change of pitch exceeds the predetermined value of 5 degrees per second and the gradient of the driving surface is less than a 5% (uphill) gradient, i.e., the gradient is less steep than 5%, horizontal or is a downhill gradient, the VCU 15 determines that the vehicle 10 is cresting and begins to calculate a value of tgt_crest_acc in dependence on parameters (1) - (3) above.

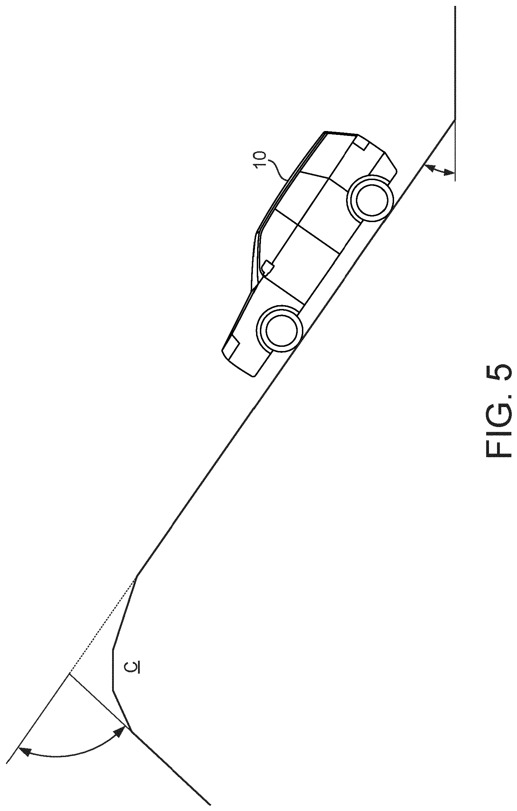

FIG. 5 illustrates a vehicle 10 ascending a slope towards a crest C, beyond which the driving surface has a negative (downhill) gradient. As the vehicle 10 traverses the crest C, the VCU 15 detects a reduction in gradient of the driving surface and a lowering of vehicle pitch (i.e., vehicle pitch attitude). If the rate of change of pitch exceeds the predetermined value of 5 degrees per second and the gradient of the driving surface is less than a 5% (uphill) gradient, i.e., the gradient is less steep than 5%, horizontal or is a downhill gradient, the VCU 15 determines that the vehicle 10 is cresting and begins to calculate a value of tgt_crest_acc in dependence on parameters (1) - (3) above.

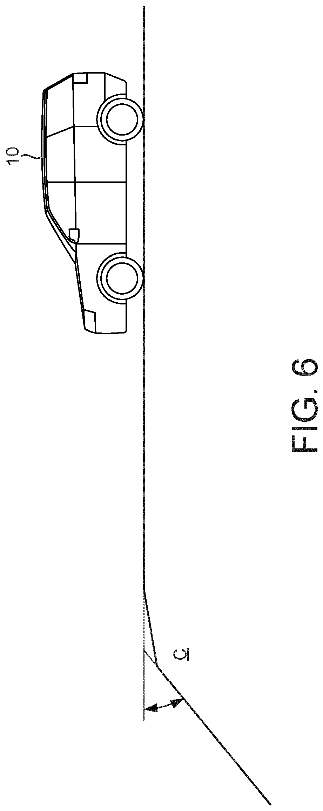

FIG. 6 illustrates a vehicle 10 negotiating a path across a substantially horizontal driving surface (i.e., having a gradient of substantially 0%) toward a crest C, beyond which the driving surface has a negative (downhill) gradient. Cresting condition (b), that the gradient value of the driving surface, as determined by reference to the driving surface gradient signal, is equal to or below 5%, is therefore met. As the vehicle 10 traverses the crest C, the VCU 15 detects a lowering of vehicle pitch (i.e., vehicle pitch attitude). If the rate of change of pitch exceeds the predetermined value of 5

degrees per second, the VCU 15 determines that cresting condition (a) is met and that the vehicle 10 is therefore cresting. The VCU 15 then begins to calculate a value of tgt_crest_accin dependence on parameters (1) - (3) above.

In the present embodiment, when the VCU 15 is calculating a value of tgt_crest_acc in response to a first determination that the vehicle is cresting, the VCU 15 will not subsequently impose a further deceleration in response to a second, subsequent determination that the vehicle is cresting, unless the second determination occurs a predetermined crest detection period following the first determination that the vehicle is cresting.

In some embodiments, the predetermined crest detection period corresponds to substantially twice the predetermined speed reduction period. Other multiples may be useful in some embodiments.

In the present embodiment, the predetermined crest detection period is a period of 4 s, being twice the predetermined speed reduction period of 2 s, but in some embodiments may be any other suitable time period such as 5 s, 10 s or any other suitable value.

In an alternative embodiment, when the VCU 15 is calculating a value of acc_demand in response to a first determination that the vehicle is cresting, the VCU 15 will not subsequently impose a further deceleration in response to a second, subsequent determination that the vehicle is cresting, unless the second determination occurs a predetermined crest detection distance following the first determination that the vehicle is cresting. The predetermined crest detection distance may be any suitable distance such as a single wheelbase, twice the wheelbase, three times the wheelbase, four times the wheelbase or any suitable distance.

In some embodiments, the predetermined crest detection distance corresponds to substantially twice the predetermined speed reduction distance. Other multiples may be useful in some embodiments.

In one embodiment, the predetermined speed reduction distance corresponds to substantially twice the wheelbase of the vehicle and the predetermined crest detection distance corresponds to substantially four times the wheelbase.

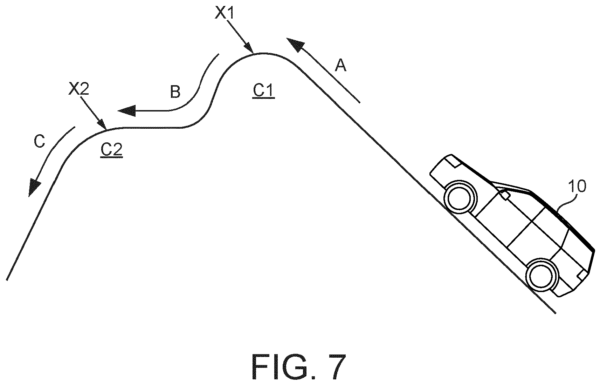

FIG. 7 illustrates the path of a vehicle 10 over two crests spaced a relatively short distance apart. The vehicle 10 is shown climbing a hill towards a first crest C1. As the vehicle negotiates the crest C1, at position X1 the conditions are met at which the VCU 15 determines that the vehicle 10 is cresting. The VCU 15 therefore calculates a value of acceleration, tgt_crest_acc, to be imposed on the vehicle as it negotiates the crest.

After passing position X1, the VCU 15 starts a timer. The VCU 15 continues to calculate a value of tgt_crest_acc in dependence on the value of parameters (a) - (c) described above. After the predetermined speed reduction period has elapsed (in the present embodiment, 2s), the vehicle 10 terminates calculating a value of tgt_crest_acc in dependence on the value of parameters (a)-(c) described above, and sets the value acc_demand to the maximum allowable value of vehicle acceleration, Amax, as described above. The vehicle acceleration calculation portion 15c thus ignores the value of acc_demand received in determining vehicle speed, and causes vehicle speed to revert to the lower of the current value of driver set speed and the prevailing value of max_set_speed.

With further reference to FIG. 7, position X2 is a location of the vehicle 10 at which conditions (a) - (c) are again met for the VCU 15 to make a second determination that the vehicle is cresting. However, if the time taken to travel from position X1 to position X2 is less than the predetermined crest detection period following the first determination that the vehicle is cresting at location X1, in the present embodiment 4s, the VCU 15 ignores the fact that a crest has been detected. However, if the predetermined crest detection period has expired when the vehicle reaches location X2, the VCU 15 responds in the manner described above with respect to its arrival at position X1. That is, the VCU 15 starts a timer and imposes a deceleration on the vehicle by calculating a value of tgt_crest_acc in dependence on the value of parameters (a) - (c).

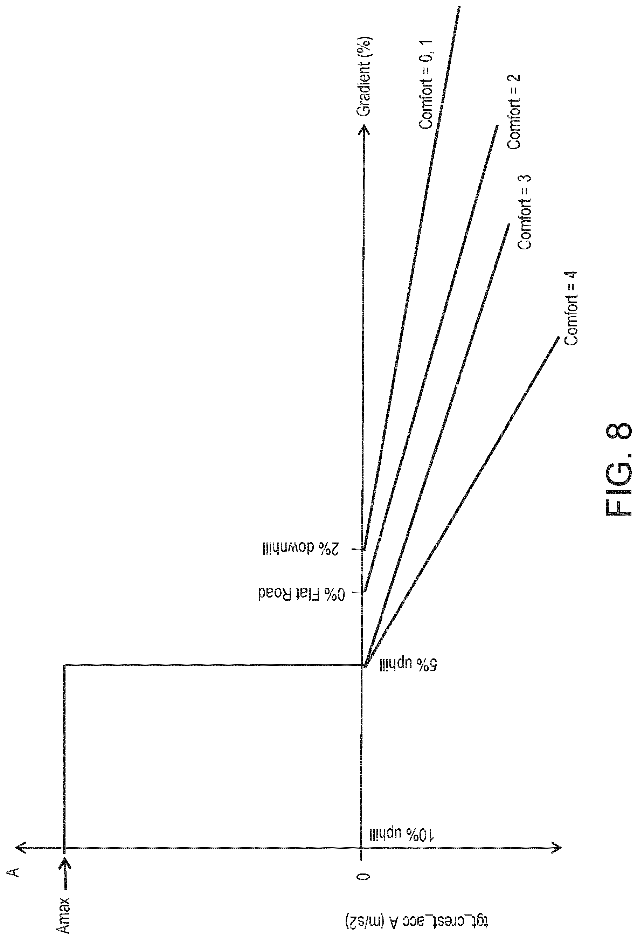

FIG. 8 illustrates the determination of the value of tgt_crest_acc and acc_demand by the VCU 15. In FIG. 8 the horizontal axis is the surface gradient, with 0% representing a zero gradient condition ('0% Flat Road'). On the horizontal axis, the surface gradient increases in an uphill direction when moving to the left of the 0% Flat Road condition and the surface gradient increases in a downhill direction when moving to the right of the 0% Flat Road condition.

As described above, when the VCU 15 determines that the vehicle is not cresting, the value of parameter acc_demand output from the cresting acceleration demand calculation portion 15b is set to the maximum allowable value Amax. The vehicle acceleration calculation portion 15c therefore does not cause a reduction in the value of acc_tgt in response to receipt of the signal acc_demand. Rather, speed is controlled in dependence on the value of max_set_speed received from the max set speed calculation portion 15a.

As noted above, it is to be understood that the speed control system implemented by the VCU 15 is configured such that the vehicle acceleration calculation portion 15c cannot cause vehicle speed to fall to a value less than a predetermined minimum value. In the present embodiment, the predetermined minimum value is 2 km/h but other values may be useful in some embodiments.

In the event that the conditions for cresting are met, the VCU 15 calculates a value of tgt_crest_acc as described above and also illustrated in FIG. 8.

As can be seen in FIG. 8, the value of tgt_crest_acc is set to increasingly negative values (corresponding to increasingly severe vehicle deceleration) in dependence on the value of the comfort parameter. In the present embodi-

ment, as shown by trace 'A' in FIG. 8, when the value of comfort parameter is zero (corresponding to an 'off' condition) or has a value of '1', the value of tgt_crest_acc changes from Amax to increasingly negative values once the gradient reaches a value of 2% in a downhill direction (i.e., a gradient of minus 2% or '-2%'). These conditions are indicated by the line labelled 'Comfort = 0, 1' in FIG. 8.

In the case that the value of comfort parameter is '2', the value of acc_demand changes from Amax to the value of tgt_crest_acc, which corresponds to increasingly negative values of acceleration once the gradient reaches a value of 0%. This condition is indicated by trace 'B' and the line labelled 'Comfort = 2' in FIG. 8.

In the case that the value of comfort parameter is '3' or '4', the value of tgt_crest_acc corresponds to increasingly negative values once the gradient falls below a value of +5%. The rate of increase of tgt_crest_acc in a negative direction is more severe in the case that the comfort parameter has a value of '4', i.e., the gradient of the plot of tgt_crest_acc as a function of gradient is steeper, resulting in a greater speed reduction than in the case that the comfort parameter has a value of '3' or less. This condition is indicated by trace 'C' and the line labelled 'Comfort = 3' or 'Comfort = 4' in FIG. 8.

In the present embodiment, in the event that the comfort parameter is set to a value of '4', being the highest required value of occupant comfort, the VCU 15 is configured to determine that the vehicle is cresting when the pitch rate in a downward direction is at a lower value than in the case of lower values of comfort parameter. This condition is indicated by the line labelled 'Comfort = 4' in FIG. 8. In the present embodiment, when the comfort parameter is set to a value of '4', the VCU 15 is configured to require that the pitch rate exceeds a value of 3 degrees per second in order to determine that the vehicle is cresting, in addition to the gradient being less than 5%. Other values of pitch rate may be useful in some embodiments such as 2 degrees per second, 2.5 degrees per second, 4 degrees per second or any other suitable value. Other values of gradient may also be useful in some embodiments.

It is to be understood that different values of pitch rate may be required before cresting is determined when the value of comfort parameter has other values, such as when the value is 1, 2 or 3.

As noted above, the 'cresting acceleration demand calculation' portion 15b receives the value of comfort parameter and determines the value of tgt_crest_acc in dependence in part on the comfort parameter. In some embodiments the 'cresting acceleration demand calculation' portion 15b also adjusts the rate at which the vehicle assumes the desired rate of acceleration, tgt_crest_acc, in dependence on the value of the comfort parameter in order to limit the maximum value of jerk experienced at a given moment in time. The maximum allowable value of jerk (i.e. the jerk limit value) is lower for higher levels of required occupant comfort.

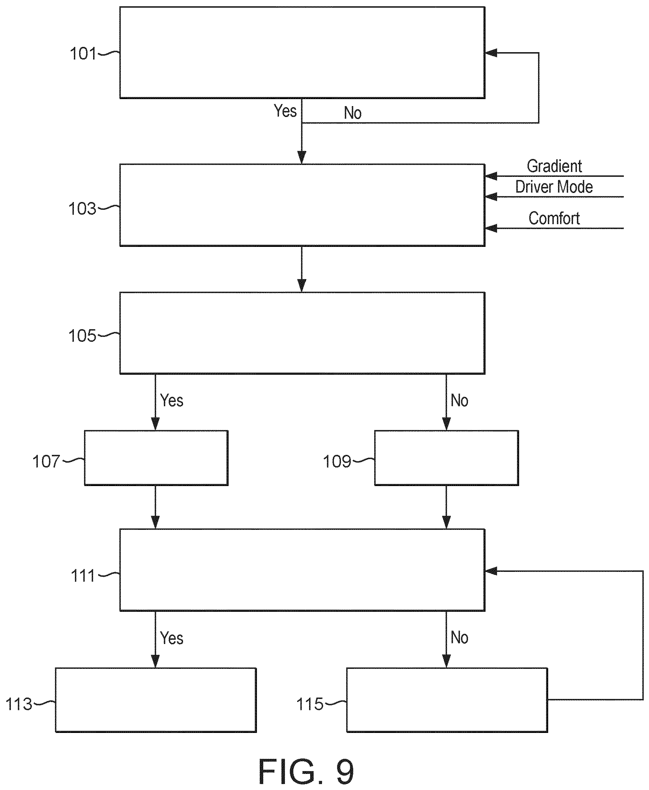

FIG. 9 illustrates the manner in which the value of jerk is limited when a change in acceleration demand is made following the detection of a crest. That is, FIG. 9 illustrates the operation of the jerk mitigation function of the 'cresting acceleration demand calculation' portion 15b when a crest is detected.

At step S101 the 'cresting acceleration demand calculation' portion 15b determines whether a crest has been detected. If a crest has not been detected, step S101 is repeated. If a crest has been detected, the method continues at step S103.

At step S103 the 'cresting acceleration demand calculation' portion 15b calculates a target value of acceleration, tgt_crest_acc, in response to the determination that the vehicle is cresting. The value of tgt_crest_acc is calculated in dependence on the driving surface gradient, driving mode and value of comfort parameter. The value of tgt_crest_acc is used to calculate the value of desired acceleration rate of the vehicle 10, acc_demand, at a given moment in time. The value of acc_demand is calculated from the value of tgt_crest_acc so as to limit the maximum value of jerk such that it does not exceed the jerk limit value.

At step S105 the 'cresting acceleration demand calculation' portion 15b determines whether the current value of acc_tgt output by the 'vehicle acceleration calculation' portion 15c is less than zero metres per second per second. If the value of acc_tgt is less than zero, the method continues at step S107 else the method continues at step S109.

At step S107 the 'cresting acceleration demand calculation' portion 15b sets the value of signal acc_demand to the current value of acc_tgt being output by the 'vehicle acceleration calculation' portion 15c and continues at step S111.

At step S109 the 'cresting acceleration demand calculation' portion 15b sets the value of signal acc_demand to zero, i.e., corresponding to a rate of acceleration of zero.

At step S111 the 'cresting acceleration demand calculation' portion 15b determines whether the value of acc_demand is equal to the value of tgt_crest_acc determined at step S103.

If the value of acc_demand = tgt_crest_acc, the method continues at steps S113 else the method continues at step S115.

At step S113 the 'cresting acceleration demand calculation' portion 15b exits the jerk mitigation function and continues to output a value of acc_demand that is equal to the value of tgt_crest_acc calculated at step S103.

At step S115 the 'cresting acceleration demand calculation' portion 15b decreases the value of acc_demand by a calibratable amount and then continues at step S111 after a predetermined time period has elapsed. It is to be understood that step S111 will be repeated until the desired value of acceleration output by the 'cresting acceleration demand calculation' portion 15b, acc_demand, corresponds to the desired value, tgt_crest_acc. It is to be understood that the amount by which the 'cresting acceleration demand calculation' portion 15b decreases the value of acc_demand and the

value of the predetermined time period are arranged such that the amount of jerk experienced by the vehicle does not exceed a predetermined jerk amount (the jerk limit value). It is to be understood that, in the present embodiment, the predetermined jerk amount is dependent on the value of comfort parameter, the predetermined jerk amount being lower for higher levels of required comfort. As described above, in the present embodiment higher values of comfort parameter correspond to higher levels of required comfort.

It is to be understood that the amount by which the 'cresting acceleration demand calculation' portion 15b decreases the value of acc_demand and the value of the predetermined time period are arranged such that the amount of jerk experienced by the vehicle does not exceed a predetermined jerk amount. As described above with respect to FIG. 9, it is to be understood that, in the present embodiment, the predetermined jerk amount is dependent on the value of comfort parameter, the predetermined jerk amount being lower for higher levels of required comfort. As also described above, in the present embodiment higher values of comfort parameter correspond to higher levels of required comfort.

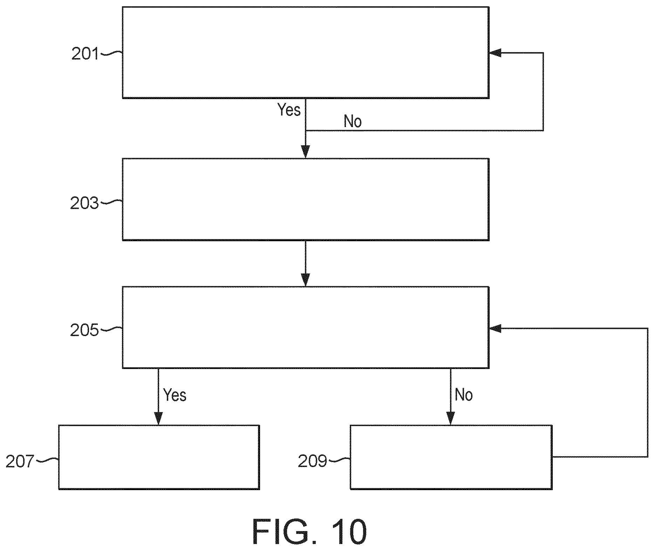

FIG. 10 illustrates the manner in which the VCU 15 controls vehicle speed once a cresting event has finished.

At step S201 the 'cresting acceleration demand calculation' portion 15b determines whether the cresting event has finished. If the event has finished the method continues at step S203 else step S201 is repeated.

At step S203 the 'cresting acceleration demand calculation' portion 15b sets the value of tgt_crest_acc to the maximum allowable value of acceleration Amax and the method continues at step S205.

At step S205 the 'cresting acceleration demand calculation' portion 15b determines whether the value of acc_demand currently output by the 'cresting acceleration demand calculation' portion 15b is equal to the value of tgt_crest_acc. If acc_demand=tgt_crest_acc the method continues at step S207 else the method continues at step S209.

At step S207 the 'cresting acceleration demand calculation' portion 15b exits the jerk mitigation function and maintains the value of acc_demand until the next crest is detected.

At step S209 the 'cresting acceleration demand calculation' portion 15b increases the value of acc_demand by a calibratable amount. The method then continues at step S205 once a predetermined time period has elapsed.

It is to be understood that the amount by which the 'cresting acceleration demand calculation' portion 15b decreases the value of acc_demand and the value of the predetermined time period are arranged such that the amount of jerk experienced by the vehicle does not exceed a predetermined jerk amount. As described above with respect to FIG. 9, it is to be understood that, in the present embodiment, the predetermined jerk amount is dependent on the value of comfort parameter, the predetermined jerk amount being lower for higher levels of required comfort. As also described above, in the present embodiment higher values of comfort parameter correspond to higher levels of required comfort.

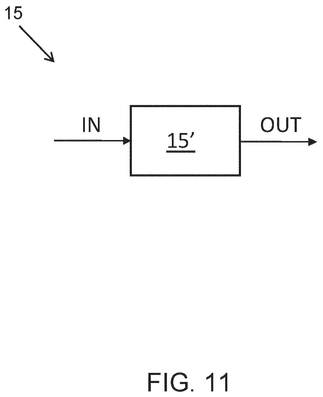

FIG. 11 is a schematic illustration of an electronic controller 15' comprised by VCU 15 and configured to implement the speed control system of the VCU 15.

It will be appreciated that various changes and modifications can be made to the described embodiments within the scope defined by the claims.

## Claims

1. A speed control system (15) for a vehicle (10), the speed control system configured to cause the vehicle to operate in accordance with a target speed value, the speed control system comprising one or more controllers, the speed control system configured to:

    determine when the vehicle is cresting and cause a reduction in speed of the vehicle in dependence on the determination that the vehicle is cresting, and
    receive a driving surface gradient signal indicative of a gradient of a driving surface upon which the vehicle is being driven,

    wherein when it is determined that a reduction in vehicle speed is required in response to a determination that the vehicle is cresting, the speed control system is configured to limit the value of jerk associated with the reduction in speed, the value of jerk being a rate of change of acceleration of the vehicle, such that the value of jerk does not exceed a jerk limit value, **characterised in that**
    the speed control system is configured to set the jerk limit value in dependence at least in part on the driving surface gradient and reduce the jerk limit value as a function of increasingly negative driving surface gradient such that the vehicle continually adjusts the jerk limit value in response to changes in driving surface gradient.

2. A speed control system according to claim 1 configured to determine the jerk limit value in dependence at least in part on the at least one vehicle parameter by means of a look-up table.

3. A speed control system according to any one of the preceding claims configured to set the jerk limit value in

dependence at least in part on an occupant comfort parameter indicative of a desired value of occupant comfort.

4. A speed control system according to any one of the preceding claims configured to set the jerk limit value in dependence at least in part on at least one of:

a terrain indicator parameter indicative of the nature of terrain over which the vehicle is driving,
an occupancy parameter indicative of a number of occupants of the vehicle, a vehicle ride height parameter indicating selected vehicle ride height; and a cross-articulation parameter indicative of an amount of cross-articulation experienced by the vehicle.

5. A speed control system according to the preceding claims, further configured to receive a pitch rate signal indicative of a rate of change of pitch attitude of a vehicle, the speed control system being configured to determine that the vehicle is cresting when the pitch rate information signal indicates that a change of vehicle pitch attitude exceeds a predetermine rate in a direction corresponding to a lowering of pitch attitude, and the gradient signal indicates that the gradient value of the driving surface is below a limit value.

6. A speed control system according to any preceding claim configured to cause the reduction in speed when it is determined that the vehicle is cresting by at least one of:

application of brake torque by means of a vehicle braking system; and
reducing an amount of positive drive torque applied to one or more wheels of the vehicle.

7. A system for controlling a speed of a vehicle comprising:

a speed control system as claimed in any preceding claim; and one or more sensors configured to output information indicative of vehicle jerk.

8. A vehicle comprising the speed control system of any of claims 1 to 6 or the system of claim 7.

9. A method of controlling a speed of a vehicle implemented by a speed control system, comprising:

causing the vehicle to operate in accordance with a target speed value; and
determining when the vehicle is cresting,
receiving a driving surface gradient signal indicative of a gradient of a driving surface upon which the vehicle is being driven,
the method comprising causing a reduction in speed of the vehicle when it is determined that the vehicle is cresting, whereby when it is determined that a reduction in vehicle speed is required in response to a determination that the vehicle is cresting, the method comprises limiting the value of jerk associated with the reduction in speed, the value of jerk providing an indication of a rate of change of acceleration of the vehicle, such that the value of the jerk does not exceed a jerk limit value, **characterised in that**
the speed control system is configured to set the jerk limit value in dependence at least in part on the driving surface gradient and reduce the jerk limit value as a function of increasingly negative driving surface gradient such that the vehicle continually adjusts the jerk limit value in response to changes in driving surface gradient.

10. A non-transitory, computer-readable storage medium storing instructions thereon that, when executed by one or more electronic processors, causes the one or more electronic processors to carry out the method of claim 9.

## Patentansprüche

1. Geschwindigkeitssteuerungssystem (15) für ein Fahrzeug (10), wobei das Geschwindigkeitssteuerungssystem konfiguriert ist, um zu veranlassen, dass das Fahrzeug gemäß einem Zielgeschwindigkeitswert betrieben wird, das Geschwindigkeitssteuerungssystem umfassend eine oder mehrere Steuerungen, wobei das Geschwindigkeitssteuerungssystem konfiguriert ist, um:

zu bestimmen, wann das Fahrzeug eine Kuppe überfährt, und Veranlassen einer Verringerung der Geschwindigkeit des Fahrzeugs in Abhängigkeit von dem Bestimmen, dass das Fahrzeug eine Kuppe überfährt, und
einen Fahrbahnneigungssignal zu empfangen, das die Neigung der Fahrbahn anzeigt, auf der das Fahrzeug

fährt,
wobei das Geschwindigkeitssteuerungssystem, wenn bestimmt wird, dass als Reaktion auf das Bestimmen, dass das Fahrzeug eine Kuppe überfährt, eine Verringerung der Fahrzeuggeschwindigkeit erforderlich ist, konfiguriert ist, um den mit der Verringerung der Geschwindigkeit verbundenen Wert des Rucks zu begrenzen, wobei der Wert des Rucks eine Änderungsrate der Beschleunigung des Fahrzeugs ist, sodass der Wert des Rucks einen Ruckgrenzwert nicht überschreitet, **dadurch gekennzeichnet, dass** das Geschwindigkeitssteuerungssystem konfiguriert ist, um den Ruckgrenzwert mindestens teilweise in Abhängigkeit von der Fahrbahnneigung festzulegen und den Ruckgrenzwert in Abhängigkeit von einer zunehmend negativen Fahrbahnneigung zu verringern, sodass das Fahrzeug den Ruckgrenzwert kontinuierlich als Reaktion auf Änderungen der Fahrbahnneigung anpasst.

**2.** Geschwindigkeitssteuerungssystem nach Anspruch 1, das konfiguriert ist, um den Ruckgrenzwert mindestens teilweise in Abhängigkeit von mindestens einem Fahrzeugparameter mittels einer Nachschlagetabelle zu bestimmen.

**3.** Geschwindigkeitssteuerungssystem nach einem der vorstehenden Ansprüche, das konfiguriert ist, um den Ruckgrenzwert mindestens teilweise in Abhängigkeit von einem Insassenkomfortparameter festzulegen, der einen gewünschten Wert für den Insassenkomfort anzeigt.

**4.** Geschwindigkeitssteuerungssystem nach einem der vorstehenden Ansprüche, das konfiguriert ist, um den Ruckgrenzwert mindestens teilweise in Abhängigkeit von mindestens einem der folgenden Parameter festzulegen:

einem Geländeanzeigerparameter, der die Art des Geländes anzeigt, über das das Fahrzeug fährt,
einem Belegungsparameter, der die Anzahl der Insassen des Fahrzeugs anzeigt, einem Fahrzeugfahrhöhenparameter, der die gewählte Fahrzeugfahrhöhe anzeigt, und einem Querartikulationsparameter, der das Ausmaß der vom Fahrzeug erfahrenen Querartikulation anzeigt.

**5.** Geschwindigkeitssteuerungssystem nach den vorstehenden Ansprüchen, das ferner konfiguriert ist, um ein Nickgeschwindigkeitssignal zu empfangen, das die Änderungsrate der Nicklage eines Fahrzeugs anzeigt, wobei das Geschwindigkeitssteuerungssystem konfiguriert ist, um zu bestimmen, dass das Fahrzeug eine Kuppe überfährt, wenn das Nickgeschwindigkeitssignal anzeigt, dass eine Änderung der Nicklage des Fahrzeugs eine vorbestimmte Rate in einer Richtung überschreitet, die einer Absenkung der Nicklage entspricht, und das Neigungssignal anzeigt, dass der Neigungswert der Fahrbahn unter einem Grenzwert liegt.

**6.** Geschwindigkeitssteuerungssystem nach einem der vorstehenden Ansprüche, das konfiguriert ist, um die Verringerung der Geschwindigkeit zu veranlassen, wenn bestimmt wird, dass das Fahrzeug eine Kuppe überfährt, und zwar durch mindestens eines der folgenden Verfahren:

Anlegen eines Bremsmoments mittels eines Fahrzeugbremssystems; und
Verringern eines Betrags des positiven Antriebsmoments, das auf ein oder mehrere Räder des Fahrzeugs ausgeübt wird.

**7.** System zum Steuern einer Geschwindigkeit eines Fahrzeugs, umfassend:

ein Geschwindigkeitssteuerungssystem nach einem der vorstehenden Ansprüche; und einen oder mehrere Sensoren, die konfiguriert sind, um Informationen anzugeben, die den Ruck des Fahrzeugs anzeigen.

**8.** Fahrzeug, umfassend das Geschwindigkeitssteuerungssystem nach einem der Ansprüche 1 bis 6 oder das System nach Anspruch 7.

**9.** Verfahren zum Steuern der Geschwindigkeit eines Fahrzeugs, das von einem Geschwindigkeitssteuerungssystem implementiert wird, umfassend:

Veranlassen, dass das Fahrzeug gemäß einem Zielgeschwindigkeitswert betrieben wird; und
Bestimmen, wann das Fahrzeug eine Kuppe überfährt,
Empfangen eines Fahrbahnneigungssignals, das eine Neigung der Fahrbahn anzeigt, auf der das Fahrzeug fährt,
das Verfahren umfassend das Veranlassen einer Verringerung der Geschwindigkeit des Fahrzeugs, wenn

bestimmt wird, dass das Fahrzeug eine Kuppe überfährt, wobei das Verfahren, wenn bestimmt wird, dass eine Verringerung der Fahrzeuggeschwindigkeit als Reaktion auf das Bestimmen, dass das Fahrzeug eine Kuppe überfährt, erforderlich ist, das Begrenzen des mit der Verringerung der Geschwindigkeit verbundenen Ruckwerts umfasst, wobei der Wert des Rucks einen Hinweis auf die Änderungsrate der Beschleunigung des Fahrzeugs liefert, sodass der Wert des Rucks einen Ruckgrenzwert nicht überschreitet, **dadurch gekennzeichnet, dass** das Geschwindigkeitssteuerungssystem konfiguriert ist, um den Ruckgrenzwert mindestens teilweise in Abhängigkeit von der Fahrbahnneigung festzulegen und den Ruckgrenzwert in Abhängigkeit von einer zunehmend negativen Fahrbahnneigung zu verringern, sodass das Fahrzeug den Ruckgrenzwert kontinuierlich als Reaktion auf Änderungen der Fahrbahnneigung anpasst.

**10.** Nichtflüchtiges, computerlesbares Speicherungsmedium, das Anweisungen darauf speichert, die, wenn sie durch einen oder mehrere elektronische Prozessoren ausgeführt werden, den einen oder die mehreren elektronischen Prozessoren veranlassen, das Verfahren nach Anspruch 9 auszuführen.

## Revendications

**1.** Système de commande de vitesse (15) pour un véhicule (10), le système de commande de vitesse étant configuré pour amener le véhicule à fonctionner conformément à une valeur de vitesse cible, le système de commande de vitesse comprenant un ou plusieurs dispositifs de commande, le système de commande de vitesse étant configuré pour :

déterminer lorsque le véhicule atteint le sommet et provoquer une réduction de la vitesse du véhicule en fonction de la détermination du fait que le véhicule atteint le sommet, et
recevoir un signal de pente de surface de conduite indiquant une pente d'une surface de conduite sur laquelle le véhicule roule,
dans lequel, lorsqu'il est déterminé qu'une réduction de la vitesse de véhicule est nécessaire en réponse à une détermination du fait que le véhicule atteint le sommet, le système de commande de vitesse est configuré pour limiter la valeur d'à-coup associée à la réduction de vitesse, la valeur d'à-coup étant un taux de variation d'accélération du véhicule, de telle sorte que la valeur d'à-coup ne dépasse pas une valeur limite d'à-coup, **caractérisé en ce que** le système de commande de vitesse est configuré pour définir la valeur limite d'à-coup en fonction, au moins en partie, de la pente de surface de conduite et pour réduire la valeur limite d'à-coup en fonction d'une pente de surface de conduite de plus en plus négative, de telle sorte que le véhicule ajuste continuellement la valeur limite d'à-coup en réponse à des variations de pente de surface de conduite.

**2.** Système de commande de vitesse selon la revendication 1, configuré pour déterminer la valeur limite d'à-coup en fonction, au moins en partie, de l'au moins un paramètre de véhicule au moyen d'une table de consultation.

**3.** Système de commande de vitesse selon l'une quelconque des revendications précédentes, configuré pour définir la valeur limite d'à-coup en fonction, au moins en partie, d'un paramètre de confort de l'occupant indiquant une valeur souhaitée de confort de l'occupant.

**4.** Système de commande de vitesse selon l'une quelconque des revendications précédentes, configuré pour définir la valeur limite d'à-coup en fonction, au moins en partie, d'au moins l'un parmi :

un paramètre indicateur de terrain indiquant la nature de terrain sur lequel le véhicule roule,
un paramètre d'occupation indiquant un nombre d'occupants du véhicule, un paramètre de hauteur de conduite de véhicule indiquant une hauteur de conduite de véhicule sélectionnée ; et un paramètre d'articulation transversale indiquant une amplitude d'articulation transversale subie par le véhicule.

**5.** Système de commande de vitesse selon les revendications précédentes, configuré en outre pour recevoir un signal de vitesse de tangage indiquant un taux de variation d'assiette en tangage d'un véhicule, le système de commande de vitesse étant configuré pour déterminer que le véhicule atteint le sommet lorsque le signal d'informations de vitesse de tangage indique qu'un changement d'assiette en tangage de véhicule dépasse une rythme prédéterminé dans une direction correspondant à un abaissement d'assiette en tangage, et le signal de pente indique que la valeur de pente de la surface de conduite est inférieure à une valeur limite.

**6.** Système de commande de vitesse selon l'une quelconque revendication précédente, configuré pour provoquer la

réduction de vitesse lorsqu'il est déterminé que le véhicule atteint le sommet par au moins l'un parmi :

l'application d'un couple de freinage au moyen d'un système de freinage de véhicule ; et
la réduction d'une amplitude de couple d'entraînement positif appliqué à une ou plusieurs roues du véhicule.

**7.** Système permettant de commander une vitesse d'un véhicule, comprenant :
un système de commande de vitesse selon l'une quelconque revendication précédente ; et un ou plusieurs capteurs configurés pour émettre des informations indiquant un à-coup de véhicule.

**8.** Véhicule comprenant le système de commande de vitesse selon l'une quelconque des revendications 1 à 6 ou le système selon la revendication 7.

**9.** Procédé de commande d'une vitesse d'un véhicule mise en œuvre au moyen d'un système de commande de vitesse, comprenant :

le fait d'amener le véhicule à fonctionner conformément à une valeur de vitesse cible ; et
la détermination du moment où le véhicule atteint le sommet,
la réception d'un signal de pente de surface de conduite indiquant une pente d'une surface de conduite sur laquelle le véhicule roule,
le procédé comprenant le fait d'amener une réduction de vitesse du véhicule lorsqu'il est déterminé que le véhicule atteint le sommet, moyennant quoi lorsqu'il est déterminé qu'une réduction de vitesse de véhicule est nécessaire en réponse à la détermination du fait que le véhicule atteint le sommet, le procédé comprend la limitation de la valeur d'à-coup associée à la réduction de vitesse, la valeur d'à-coup fournissant une indication d'un taux de variation d'accélération du véhicule, de telle sorte que la valeur de l'à-coup ne dépasse pas une valeur limite d'à-coup, **caractérisé en ce que** le système de commande de vitesse est configuré pour définir la valeur limite d'à-coup en fonction, au moins en partie, de la pente de surface de conduite et réduire la valeur limite d'à-coup en fonction d'une pente de surface de conduite de plus en plus négative, de telle sorte que le véhicule ajuste continuellement la valeur limite d'à-coup en réponse aux variations de pente de la surface de conduite.

**10.** Support de stockage non transitoire lisible par ordinateur stockant des instructions sur celui-ci qui, lorsqu'elles sont exécutées par un ou plusieurs processeurs électroniques, amènent le ou les processeurs électroniques à réaliser le procédé selon la revendication 9.

10
6
171
17
16
15
18
19
2
1
11
5
10FW
13
12
10RW

FIG. 1

171
178
173
174
179
175

FIG. 2

acc_tgt
15c
COMFORT
Max_set_speed
15a
max_lat_acc
STEERING ANGLE, δ
YAW RATE
MEASURED LAT. ACC.
SURFACE ROUGHNESS
(GPS LOCATION)
(CAMERA)
15d
µmeas
µTRmode
acc_demand
COMFORT
15b
TRmode
GRADIENT
PITCH RATE

FIG. 3

10
C
FIG. 4

10
C

FIG. 5

10
α

FIG. 6

X1
A
X2
B
C1
C
C2
10

FIG. 7

A
Amax
0
tgt_crest_acc A (m/s2)
10% uphill
5% uphill
0% Flat Road
2% downhill
Gradient (%)
Comfort = 0, 1
Comfort = 2
Comfort = 3
Comfort = 4

FIG. 8

101
Yes
No
103
Gradient
Driver Mode
Comfort
105
Yes
No
107
109
111
Yes
No
113
115

FIG. 9

201
Yes
No
203
205
Yes
No
207
209

FIG. 10

15
IN
15'
OUT

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013124321 A
- WO 2018007535 A
- WO 2016174211 A